# FASCICULE DE BREVET EUROPEEN

(11) **EP 3 175 502 B1**
(45) Date de publication et mention de la délivrance du brevet: **15.08.2018**
(21) Numéro de dépôt: 15753097.3
(22) Date de dépôt: 08.07.2015
(51) Int. Cl.: H01M 8/026, H01M 8/0265, H01M 8/0258, H01M 8/0267, H01M 8/1018, C25B 9/10

(54) **RÉACTEUR ÉLECTROCHIMIQUE ÉQUILIBRANT LES PERTES DE CHARGE DES ZONES D'HOMOGÉNÉISATION CATHODE/ANODE**
ELEKTROCHEMISCHER REAKTOR, DER DEN LADUNGSVERLUST DER HOMOGENEISIERENDEN ZONEN DER KATHODE/ DER ANODE AUSGLEICHT
ELECTROCHEMICAL REACTOR BALANCING THE CHARGE LOSS OF THE HOMOGENISING ZONES OF THE CATHODE AND THE ANODE

(30) Priorité: 29.07.2014 FR 1457327
(43) Date de publication de la demande: 07.06.2017
(73) Titulaire: Commissariat à l'Energie Atomique et aux Energies Alternatives, 75015 Paris (FR)
(72) Inventeur: VINCENT, Rémi, F-38000 Grenoble (FR); POIROT-CROUVEZIER, Jean-Philippe, F-38450 Saint Georges de Commiers (FR)
(74) Mandataire: GIE Innovation Competence Group
(86) Numéro de dépôt international: PCT/FR2015/051893
(87) Numéro de publication internationale: WO 2016/016535

(56) Documents cités:
- JP-A- H08 138 696
- US-A1- 2006 065 520
- US-A1- 2010 129 694

## Description

L'invention concerne les réacteurs électrochimiques incluant un empilement de cellules électrochimiques, et plus particulièrement un empilement incluant des plaques bipolaires et des membranes échangeuses de protons. De tels réacteurs électrochimiques constituent par exemple des piles à combustible ou des électrolyseurs.

Les piles à combustible sont notamment envisagées comme source d'énergie pour des véhicules automobiles produits à grande échelle dans le futur ou comme sources d'énergie auxiliaire dans l'aéronautique. Une pile à combustible est un dispositif électrochimique qui convertit de l'énergie chimique directement en énergie électrique. Une pile à combustible comprend un empilement en série de plusieurs cellules. Chaque cellule génère typiquement une tension de l'ordre de 1 Volt, et leur empilement permet de générer une tension d'alimentation d'un niveau plus élevé, par exemple de l'ordre d'une centaine de volts.

Parmi les types de piles à combustible connus, on peut notamment citer la pile à combustible à membrane d'échange de protons, dite PEM, fonctionnant à basse température. De telles piles à combustible présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, du dihydrogène utilisé comme carburant est ionisé pour produire des protons traversant la membrane. La membrane forme ainsi un conducteur ionique. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques dites bipolaires, par exemple en métal, empilées les unes sur les autres. La membrane est disposée entre deux plaques bipolaires. Les plaques bipolaires peuvent comprendre des canaux et orifices d'écoulement pour guider en continu les réactifs et les produits vers/depuis la membrane. Les plaques bipolaires comprennent aussi des canaux d'écoulement pour guider du liquide de refroidissement évacuant la chaleur produite. Les produits de réactions et les espèces non réactives sont évacués par entraînement par l'écoulement jusqu'à la sortie des réseaux de canaux d'écoulement. Les canaux d'écoulement des différents écoulements sont séparés par l'intermédiaire des plaques bipolaires notamment.

Les plaques bipolaires sont également électriquement conductrices pour collecter des électrons générés au niveau de l'anode. Les plaques bipolaires ont également une fonction mécanique de transmission des efforts de serrage de l'empilement, nécessaire à la qualité du contact électrique. Des couches de diffusion gazeuse sont interposées entre les électrodes et les plaques bipolaires et sont en contact avec les plaques bipolaires.

Une conduction électronique est réalisée à travers les plaques bipolaires, une conduction ionique étant obtenue à travers la membrane.

On distingue principalement trois modes de circulation des réactifs dans les canaux d'écoulement:
- les canaux en serpentin: un ou plusieurs canaux parcourent l'ensemble de la surface active en plusieurs allers-retours.
- les canaux parallèles: un faisceau de canaux parallèles et traversants parcourt la surface active de part en part. Les canaux d'écoulement peuvent être rectilignes ou légèrement ondulés.
- les canaux interdigités: un faisceau de canaux parallèles et bouchés parcourt la surface active de part en part. Chaque canal est bouché soit du côté de l'entrée, soit du côté de la sortie de fluide. Le fluide entrant dans un canal est alors contraint à traverser localement la couche de diffusion gazeuse pour rejoindre un canal adjacent et ensuite atteindre la sortie de fluide de ce canal adjacent.

Pour favoriser la compacité et les performances, la conception implique de réduire les dimensions des canaux d'écoulement. Le mode de circulation par canaux parallèles est alors favorisé, pour limiter les pertes de charge dans de tels canaux d'écoulement de dimensions réduites, et éviter des problèmes d'écoulement de liquide de refroidissement pouvant conduire à des points chauds.

Avec des canaux d'écoulement parallèles, la distribution des réactifs aux électrodes doit être la plus homogène possible sur toute leur surface, sous peine d'altérer le fonctionnement du réacteur électrochimique. A cet effet, les plaques bipolaires comportant des canaux d'écoulement parallèles utilisent fréquemment des zones d'homogénéisation pour raccorder des collecteurs d'entrée et de sortie aux différents canaux d'écoulement des plaques bipolaires. Les réactifs sont amenés au contact des électrodes à partir de collecteurs d'entrée et les produits sont évacués à partir de collecteurs de sortie connectés aux différents canaux d'écoulement. Les collecteurs d'entrée et les collecteurs de sortie traversent généralement l'épaisseur de l'empilement de part en part. Les collecteurs d'entrée et de sortie sont usuellement obtenus par :
- des orifices respectifs traversant chaque plaque bipolaire à sa périphérie ;
- des orifices respectifs traversant chaque membrane à sa périphérie ;
- par des joints, chacun interposé entre une plaque bipolaire et une membrane. Chaque joint entoure un orifice de sa membrane et un orifice de sa plaque bipolaire. La surface de contact avec une membrane est généralement plane pour bien maintenir cette membrane souple.

Différentes solutions techniques sont connues pour mettre en communication les collecteurs d'entrée et de sortie avec les différents canaux d'écoulement. Il est notamment connu de réaliser des passages entre deux tôles métalliques d'une plaque bipolaire. Ces passages débouchent d'une part dans des orifices de collecteurs respectifs, et d'autre part dans des orifices d'injection. Une zone d'homogénéisation comprend des canaux qui mettent en communication des orifices d'injection avec des canaux d'écoulement.

La zone d'homogénéisation comprend : une zone de transfert de fluide de refroidissement, une zone d'homogénéisation de circuit de comburant et une zone d'homogénéisation de circuit de carburant superposées et débouchant respectivement vers un collecteur de liquide de refroidissement, un collecteur de circuit de comburant et un collecteur de circuit de carburant.

En pratique, avec du dihydrogène comme carburant circulant à l'anode et du dioxygène comme comburant dans de l'air circulant à la cathode, une très grande disparité de pertes de charge apparaît entre les deux écoulements pour de mêmes circuits d'écoulement dans les zones d'homogénéisation et dans les canaux d'écoulement de la zone réactive. Le rapport de pertes de charge entre l'écoulement de dihydrogène et d'air est alors généralement compris entre 2 à 10. D'une part, le dihydrogène est généralement moins visqueux que l'air incluant le dioxygène, et d'autre part son débit est plus faible. Les pertes de charge dans l'écoulement d'air peuvent ainsi être très pénalisantes pour les performances du réacteur.

Par ailleurs, en présence de zones d'homogénéisation, on constate que celles-ci génèrent une partie non négligeable des pertes de charge dans les écoulements, en particulier dans des conceptions visant à réduire l'encombrement de ces zones d'homogénéisation qui ne participent pas ou participent seulement en partie à la réaction électrochimique.

L'invention vise à résoudre un ou plusieurs de ces inconvénients. L'invention porte ainsi sur un réacteur électrochimique tel que défini dans les revendications annexées.

Le document US2010/0129694 et le document JP2010/0129265 décrivent une pile à combustible munie d'un assemblage membrane/électrodes entre des plaques bipolaires. Ce document propose de réduire les pertes de charge dans une zone d'entrée par rapport à une zone de sortie de fluide. Un premier mode de réalisation porte sur une zone d'homogénéisation sans canaux d'homogénéisation. Un deuxième mode de réalisation porte sur une zone d'homogénéisation avec des canaux d'écoulement. Dans le deuxième mode de réalisation, la réduction de perte de charge est réalisée en agrandissant la largeur des canaux d'écoulement d'entrée par rapport aux canaux d'écoulement de sortie. L'assemblage membrane/électrodes décrit est dépourvu de renfort dans tous les modes de réalisation. La membrane recouvre les canaux d'écoulement et les zones d'homogénéisation des plaques anodique et cathodique dans tous les modes de réalisation.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un exemple d'empilement d'assemblages membrane/électrodes et de plaques bipolaires pour une pile à combustible;
- la figure 2 est une vue en perspective éclatée de plaques bipolaires et d'un assemblage membrane/électrodes destinés à être empilés pour former des collecteurs d'écoulement à travers l'empilement ;
- la figure 3 est une vue partielle de dessous d'une tôle d'un exemple de plaque bipolaire ;
- la figure 4 est une vue schématique en coupe suivant un parcours d'écoulement pour un empilement incluant des plaques bipolaires selon un exemple de mise en oeuvre de l'invention ;
- la figure 5 est une vue en coupe d'une plaque bipolaire de l'empilement de la figure 4 ;
- la figure 6 est une vue en coupe transversale d'un empilement selon la figure 4 au niveau de zones d'homogénéisation ;
- la figure 7 est une vue de dessus d'un exemple de renfort ne recouvrant pas de zone d'homogénéisation.

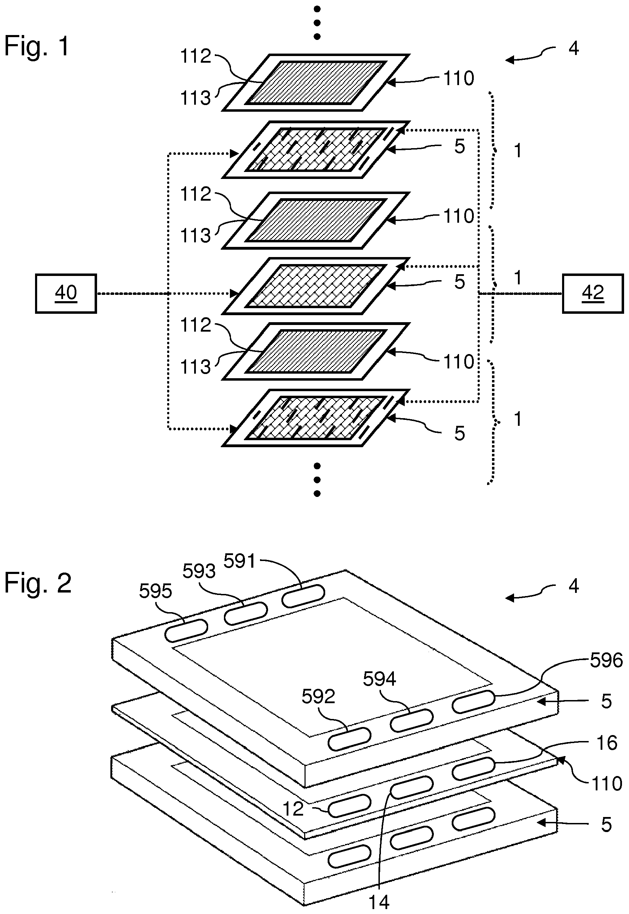

La figure 1 est une vue en perspective éclatée schématique d'un empilement de cellules 1 d'une pile à combustible 4. La pile à combustible 4 comprend plusieurs cellules 1 superposées. Les cellules 1 sont du type à membrane échangeuse de protons ou membrane à électrolyte polymère.

La pile à combustible 4 comprend une source de carburant 40. La source de carburant 40 alimente ici en dihydrogène une entrée de chaque cellule 1. La pile à combustible 4 comprend également une source de comburant 42. La source de comburant 42 alimente ici en air une entrée de chaque cellule 1, l'oxygène de l'air étant utilisé comme oxydant. Chaque cellule 1 comprend également des canaux d'échappement. Une ou plusieurs cellules 1 présentent également un circuit de refroidissement.

Chaque cellule 1 comprend un assemblage membrane/électrodes 110 ou AME 110. Un assemblage membrane/électrodes 110 comprend un électrolyte 113, une cathode 112 et une anode (non illustrée) placées de part et d'autre de l'électrolyte et fixées sur cet électrolyte 113. La couche d'électrolyte 113 forme une membrane semi-perméable permettant une conduction protonique tout en étant imperméable aux gaz présents dans la cellule. La couche d'électrolyte empêche également un passage des électrons entre l'anode et la cathode 112.

Entre chaque couple d'AME adjacents, une plaque bipolaire 5 est disposée. Chaque plaque bipolaire 5 définit des canaux d'écoulement anodiques et des canaux d'écoulement cathodiques. Des plaques bipolaires 5 définissent également des canaux d'écoulement de liquide de refroidissement entre deux assemblages membrane/électrodes successifs.

De façon connue en soi, durant le fonctionnement de la pile à combustible 4, de l'air s'écoule entre une AME et une plaque bipolaire 5, et du dihydrogène s'écoule entre cette AME et une autre plaque bipolaire 5. Au niveau de l'anode, le dihydrogène est ionisé pour produire des protons qui traversent l'AME. Les électrons produits par cette réaction sont collectés par une plaque bipolaire 5. Les électrons produits sont ensuite appliqués sur une charge électrique connectée à la pile à combustible 1 pour former un courant électrique. Au niveau de la cathode, de l'oxygène est réduit et réagit avec les protons pour former de l'eau. Les réactions au niveau de l'anode et de la cathode sont régies comme suit :

H₂ → 2H⁺ + 2e⁻ au niveau de l'anode ;

4H⁺ + 4e⁻ + O₂ → 2H₂O au niveau de la cathode.

Durant son fonctionnement, une cellule de la pile à combustible génère usuellement une tension continue entre l'anode et la cathode de l'ordre de 1V.

La figure 2 est une vue en perspective éclatée schématique de deux plaques bipolaires 5 et d'un assemblage membrane/électrodes destinés à être inclus dans l'empilement de la pile à combustible 4. L'empilement des plaques bipolaires 5 et des assemblages membrane/électrodes 110 est destiné à former une pluralité de collecteurs d'écoulement, dont la disposition est illustrée ici uniquement de manière schématique. À cet effet, des orifices respectifs sont ménagés à travers les plaques bipolaires 5 et à travers les assemblages membrane/électrodes 110. Les plaques bipolaires 5 comportent ainsi des orifices 591, 593 et 595 au niveau d'une première extrémité, et des orifices 592, 594 et 596 au niveau d'une deuxième extrémité opposée à la première. L'orifice 591 sert par exemple pour former un collecteur d'alimentation en carburant, l'orifice 596 sert par exemple pour former un collecteur d'évacuation de résidus de combustion, l'orifice 595 sert par exemple pour former un collecteur d'alimentation en liquide de refroidissement, l'orifice 592 sert par exemple pour former un collecteur d'évacuation de liquide de refroidissement, l'orifice 594 sert par exemple pour former un collecteur d'alimentation en comburant, et l'orifice 593 sert par exemple pour former un collecteur d'évacuation d'eau.

Les orifices des plaques bipolaires 5 et des assemblages membrane/électrodes 110 sont disposés en vis-à-vis afin de former les différents collecteurs d'écoulement. Des orifices 12, 14 et 16 sont par exemple ménagés dans les assemblages membrane/électrodes 110 et sont disposés en vis-à-vis respectivement des orifices 592, 594 et 596. Dans un but de simplification, l'orifice 594 sera assimilé à un collecteur d'alimentation en comburant.

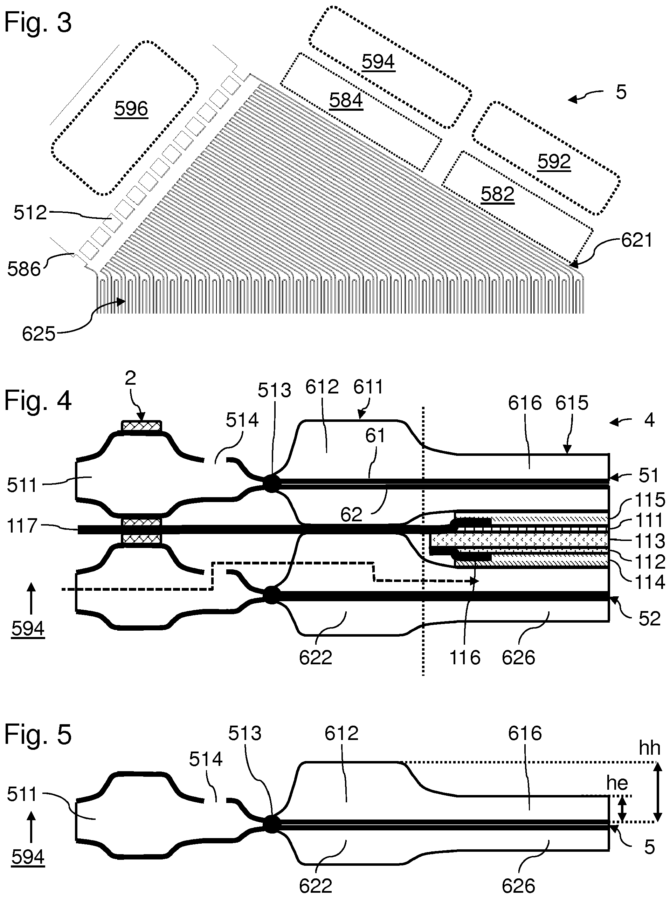

La figure 3 est une vue schématique partielle de dessous d'une tôle 61 d'un exemple de mise en oeuvre d'une plaque bipolaire 5 selon l'invention, au niveau des collecteurs 592, 594 et 596. La figure 4 est une vue en coupe d'un empilement incluant des plaques bipolaires 51 et 52 identiques à la plaque 5. Une membrane 113 d'un assemblage membrane/électrodes est disposée entre les plaques bipolaires 51 et 52. La vue en coupe suit ici le trajet d'écoulement de comburant entre des canaux d'écoulement cathodiques et le collecteur 594. Un exemple de plaque bipolaire 5 est davantage détaillé dans la vue en coupe de la figure 5.

Chacune des plaques bipolaires 5, 51 et 52 illustrées inclut deux tôles conductrices 61 et 62 solidarisées. Les tôles conductrices 61 et 62 sont avantageusement (mais non limitativement) réalisées en acier inoxydable, matériau très courant et adapté à de nombreux procédés de transformation industriels largement répandus, par exemple l'emboutissage, l'estampage et/ou le poinçonnage. Les tôles conductrices 61 et 62 sont ici solidarisées par l'intermédiaire de soudures 513.

De façon connue en soi, les différents collecteurs traversant l'empilement communiquent avec des zones d'injection respectives. Dans l'exemple illustré à la figure 3, le collecteur 596 communique avec une zone d'injection 586, le collecteur 594 communique avec une zone d'injection 584 et le collecteur 592 communique avec une zone d'injection 582. Chaque zone d'injection comporte des orifices d'injection respectifs en communication avec des canaux d'écoulement respectifs. Les zones d'injection 586, 584 et 582 sont décalées latéralement de façon à pouvoir loger plusieurs collecteurs au niveau d'une même extrémité d'une plaque bipolaire.

Des orifices d'injection 512 sont ménagés dans la tôle 62 dans la zone d'injection 586. Des orifices d'injection 514 sont ménagés dans la tôle 61 dans la zone d'injection 584. Comme illustré à la figure 4, les orifices 514 communiquent avec le collecteur 594 notamment par l'intermédiaire d'un passage 511 traversant des nervures de support de joints 2. Les nervures de support et les joints 2 entourent le collecteur 594.

Des communications de fluide non détaillées et non illustrées sont également ménagées d'une part entre le collecteur 596 et la zone d'injection 586, et d'autre part entre le collecteur 592 et la zone d'injection 582.

Les tôles conductrices 61 et 62 sont en relief, de façon à ménager des canaux d'écoulement de fluide au niveau des faces externes de chaque plaque bipolaire, et avantageusement entre les tôles conductrices 61 et 62 à l'intérieur de chacune de ces plaques bipolaires. La tôle conductrice 61 comporte une zone réactive 615 et une zone d'homogénéisation 611 sur sa face externe. La zone réactive 615 comporte des canaux d'écoulement 616. La zone d'homogénéisation 611 comporte des canaux d'homogénéisation 612 mettant en communication la zone d'injection 584 avec la zone réactive 615, comme illustré par la flèche en trait discontinu.

La tôle conductrice 62 comporte une zone réactive 625 et une zone d'homogénéisation 621 sur sa face externe. La zone réactive 625 comporte des canaux d'écoulement 626. La zone d'homogénéisation 621 comporte des canaux d'homogénéisation 622 mettant en communication la zone d'injection 586 avec les canaux d'écoulement 626.

Une zone d'homogénéisation se différencie généralement d'une zone réactive par l'absence d'électrode surplombant cette zone d'homogénéisation dans l'assemblage membrane-électrodes 110, et/ou par la présence de canaux d'homogénéisation présentant une déviation latérale par rapport aux canaux d'écoulement de la zone réactive, de façon à rendre la zone d'homogénéisation plus compacte. La fonction d'une zone d'homogénéisation est notamment de limiter les différences de débits entre les différents canaux d'écoulement de sa zone réactive respective et d'homogénéiser les pertes de charge pour les différents chemins d'écoulement possibles.

L'assemblage membrane/électrodes 110 comporte ici un renfort 116 entourant la cathode 112 et fixé à la membrane 113. Le renfort 116 comporte une ouverture médiane libérant un accès à la cathode 112. Une couche de diffusion gazeuse 114 est ici positionnée en contact avec la cathode 112 à travers cette ouverture médiane. Dans cet exemple, l'assemblage membrane/électrodes 110 comporte également un renfort 117 entourant l'anode 111 est fixée à la membrane 113. Le renfort 117 comporte une ouverture médiane libérant un accès à l'anode 111. Une couche de diffusion gazeuse 115 est ici positionnée en contact avec l'anode 111 à travers cette ouverture médiane.

La ligne en pointillés illustre la limite entre les zones réactives 615,625 et les zones d'homogénéisation 611,621. Selon l'invention, au moins un renfort ou la membrane 113 ne s'étend pas jusque dans les zones d'homogénéisation 611,621 et ne recouvre donc pas les canaux d'homogénéisation 612,622.

Ainsi, l'épaisseur de l'assemblage membrane/électrodes 110 recouvrant les zones d'homogénéisation 611 et 621 est inférieure à l'épaisseur de cet assemblage membrane/électrodes 110 au niveau d'une superposition entre la membrane 113 et les renforts 116 et 117.

Dans l'exemple illustré, deux éléments parmi la membrane 110 et les renforts 116 et 117 ne s'étendent pas jusque dans les zones d'homogénéisation 611,621. En particulier, la membrane 113 et le renfort 116 ne s'étendent pas jusque dans les zones d'homogénéisation 611,621.

Ainsi, l'épaisseur de l'assemblage membrane/électrodes 110 recouvrant les zones d'homogénéisation 611 et 621 est encore davantage réduite par rapport à la superposition entre la membrane 113 et des renforts 116 et 117.

Par conséquent, la profondeur des canaux d'homogénéisation 612 peut être accrue, de façon à réduire les pertes de charges de l'écoulement traversant la zone d'homogénéisation 611. Comme illustré à la figure 5, la profondeur des canaux d'homogénéisation 612 (illustrée par le paramètre hh) est supérieure à la profondeur des canaux d'écoulement 616 (illustrée par le paramètre he). Soit Δh = hh - he.

La différence de profondeur entre les canaux d'homogénéisation 612 et les canaux d'écoulement 616 est au moins égale à l'épaisseur de la membrane 113 (épaisseur em) ou du renfort 116 (épaisseur er116) ne s'étendant pas jusque dans la zone d'homogénéisation 611 : Δh ≥ em ou Δh ≥ er116.

La profondeur em est typiquement comprise entre 15 et 60 µm.

Si au moins deux éléments parmi la membrane 113 et les renforts 116 et 117 (épaisseur er117) ne s'étendent pas jusque dans la zone d'homogénéisation 611, la différence de profondeur entre les canaux d'homogénéisation 612 et les canaux d'écoulement 616 est au moins égale à la somme de l'épaisseur de ces deux éléments : Δh ≥ em + er116 ou Δh ≥ em +er117 ou Δh ≥ er116 + er117.

Par ailleurs, en présence d'une couche de diffusion gazeuse 114 en contact avec la cathode 112, les différences de profondeur mentionnées ci-dessus sont encore accrues de l'épaisseur de la couche de diffusion gazeuse 114.

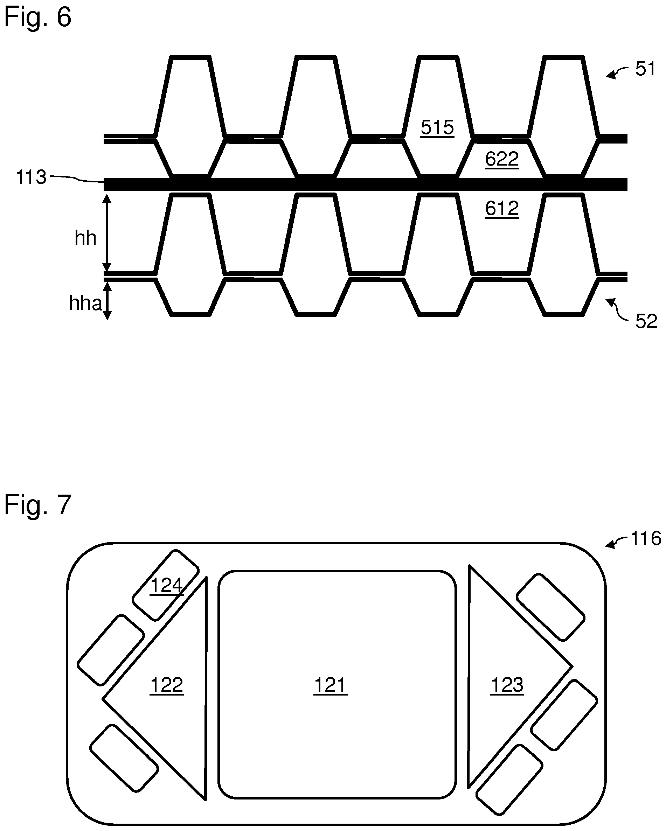

La figure 6 est une vue en coupe transversale d'un empilement au niveau des zones d'homogénéisation 611 et 621. La profondeur hh des canaux d'homogénéisation 612 est avantageusement supérieure à la profondeur hha des canaux d'homogénéisation 622, afin d'équilibrer les pertes de charge de l'écoulement cathodique et de l'écoulement anodique.

Soit Δhca = hh - hha.

En fonction des éléments qui ne recouvrent pas la zone d'homogénéisation 611, on peut prévoir Δhca ≥ em ou Δhca ≥ er116 Δhca ≥ er117 ou Δhca ≥ em + er116 ou ou Δhca ≥ em + er117 ou Δhca ≥ er116+er117.

La profondeur hha des canaux d'homogénéisation 622 est typiquement comprise entre 200 et 500µm. La largeur des canaux d'homogénéisation 622 et 612 (définie par leur largeur moyenne) est typiquement comprise entre 1 et 3mm. L'épaisseur em est typiquement comprise entre 15 et 60 µm. Les épaisseurs er116 et er117 sont typiquement comprises entre 30 et 200µm.

On peut ainsi envisager, selon les cas de figure, une différence de profondeur Δhca comprise entre 15 et 400µm.

Par exemple, avec em=25µm, er116=50µm et er117=50µm, selon l'exemple illustré à la figure 4, des simulations ont permis de constater une réduction de pertes de charge côté cathodique de 30%.

Sur la figure 6, on distingue également des canaux d'écoulement de liquide de refroidissement 515, ménagés à l'intérieur des plaques bipolaires 51 et 52.

La figure 7 est une vue de dessus d'un exemple de renfort 116 pour un empilement selon la figure 4. Le renfort 116 comporte une ouverture médiane traversante 121, destinée à libérer un accès à la cathode 112. Le renfort 116 comporte également des orifices traversants 122 et 123. Les orifices 122 et 123 sont disposés de part et d'autre de l'ouverture médiane 121. Les orifices 122 et 123 sont destinés à être traversés par les parois des canaux d'écoulement 612 de zones d'homogénéisation 611, ménagées de part et d'autre d'une zone réactive 615. Le renfort 116 comporte également des orifices 124, disposés de part et d'autre de l'ouverture médiane 121, pour former des passages pour les collecteurs de l'empilement.

L'assemblage membrane/électrodes 110 recouvre la zone d'homogénéisation 611 de la plaque 52 et la zone d'homogénéisation 622 de la plaque 51 pour séparer un écoulement cathodique d'un écoulement anodique. L'assemblage membrane/électrodes 110 s'étend ici jusqu'à des joints 2 en recouvrant des orifices d'injection 514. Dans cet exemple, seul le renfort anodique 117 de l'assemblage membrane/électrodes 110 recouvre les zones d'homogénéisation.

Les canaux d'écoulement 616 et les canaux d'écoulement 626 sont ici de type parallèle et s'étendent selon une même direction. Ces différents canaux d'écoulement ne sont pas nécessairement rectilignes (ces canaux peuvent présenter une ondulation), leur direction étant définie par une droite reliant leur entrée à leur sortie.

L'invention a été décrite en référence à une injection d'un carburant de type dihydrogène dans une pile à combustible. L'invention s'applique bien en entendu également à l'injection d'autres types de carburants, par exemple du méthanol.

L'invention a été décrite en référence à un réacteur électrochimique de type pile à combustible à membrane échangeuse de protons. L'invention peut bien entendu également s'appliquer à d'autres types de réacteurs électrochimiques, par exemple un électrolyseur comprenant également un empilement de plaques bipolaires et de membranes échangeuse de protons.

## Revendications

1. Réacteur électrochimique (4), **caractérisé en ce qu'**il comprend:
- un assemblage membrane/électrodes (110) incluant une membrane échangeuse de protons (113), une anode (111) sur une première face de la membrane, une cathode (112) sur une deuxième face de la membrane, au moins un premier renfort (116) fixé à une des faces de la membrane et entourant soit l'anode, soit la cathode;
- une plaque bipolaire conductrice (52) traversée par un premier collecteur d'écoulement (593, 594, 591, 596), une première face comportant des canaux d'écoulement (616) d'une zone réactive cathodique (615) et comportant des canaux d'homogénéisation cathodiques (612) mettant en communication la zone réactive cathodique (615) avec le premier collecteur (594);
- au moins un élément parmi ladite membrane et ledit premier renfort ne recouvrant pas les canaux d'homogénéisation cathodiques (612), et la profondeur des canaux d'homogénéisation cathodiques étant supérieure à la profondeur des canaux d'écoulement (616) de la zone réactive cathodique (615).

2. Réacteur électrochimique (4) selon la revendication 1, dans lequel le premier renfort (116) entoure la cathode (112), le réacteur comprenant en outre un deuxième renfort (117) fixé à la première face de la membrane et entourant l'anode (111), au moins deux éléments parmi ladite membrane et lesdits premier et deuxième renforts ne recouvrant pas les canaux d'homogénéisation cathodiques (612).

3. Réacteur électrochimique (4) selon la revendication 1 ou 2, dans lequel les canaux d'écoulement (616) de la zone réactive cathodique (615) s'étendent selon une même direction.

4. Réacteur électrochimique (4) selon l'une quelconque des revendications précédentes, comprenant en outre une couche de diffusion gazeuse (114) en contact avec ladite cathode (112).

5. Réacteur électrochimique (4) selon la revendication 4, dans lequel la différence de profondeur entre les canaux d'homogénéisation cathodiques (612) et les canaux d'écoulement de la zone réactive cathodique (615) est au moins égale à la somme de l'épaisseur de la couche de diffusion gazeuse (114) et de l'épaisseur dudit élément ne recouvrant pas les canaux d'homogénéisation cathodiques (612).

6. Réacteur électrochimique (4) selon les revendications 2 et 5, dans lequel la différence de profondeur entre les canaux d'homogénéisation cathodiques (612) et les canaux d'écoulement de la zone réactive cathodique (615) est au moins égale à la somme de l'épaisseur de la couche de diffusion gazeuse (114) et des épaisseurs desdits deux éléments ne recouvrant pas les canaux d'homogénéisation cathodiques (612).

7. Réacteur électrochimique (4) selon l'une quelconque des revendications précédentes, dans lequel ladite plaque bipolaire (52) est traversée par un deuxième collecteur d'écoulement (596), une deuxième face de la plaque bipolaire comportant des canaux d'écoulement (626) d'une zone réactive anodique (625) et comportant des canaux d'homogénéisation anodiques (622) mettant en communication la zone réactive anodique (625) avec le deuxième collecteur (596), la profondeur des canaux d'homogénéisation cathodiques (612) étant supérieure à la profondeur des canaux d'homogénéisation anodiques (622).

8. Réacteur électrochimique (4) selon la revendication 7, dans lequel la différence de profondeur entre les canaux d'homogénéisation cathodiques (612) et les canaux d'homogénéisation anodiques (622) est au moins égale à l'épaisseur dudit élément ne recouvrant pas les canaux d'homogénéisation cathodiques (612).

9. Réacteur électrochimique (4) selon les revendications 2 et 8, dans lequel la différence de profondeur entre les canaux d'homogénéisation cathodiques (612) et les canaux d'homogénéisation anodiques (622) est au moins égale à la somme des épaisseurs desdits éléments ne recouvrant pas les canaux d'homogénéisation cathodique (612).

10. Réacteur électrochimique (4) selon l'une quelconque des revendications précédentes, dans lequel des canaux d'écoulement de liquide de refroidissement sont ménagés à l'intérieur de ladite plaque bipolaire (52).

## Patentansprüche

1. Elektrochemischer Reaktor (4), **dadurch gekennzeichnet, dass** dieser umfasst:
- eine Membran/Elektroden-Anordnung (110), die eine Protonenaustauschmembran (113), eine Anode (111) auf einer ersten Fläche der Membran, eine Kathode (112) auf einer zweiten Fläche der Membran, mindestens eine erste Verstärkung (116), die an einer der Flächen der Membran befestigt ist und entweder die Anode oder die Kathode umgibt;
- eine bipolare leitende Platte (52), die von einem ersten Strömungskollektor (593, 594, 591, 596) durchquerst wird, wobei eine erste Fläche Strömungskanäle (616) einer reaktiven Kathodenzone (615) umfasst und Kathodenhomogenisierungskanäle (612) umfasst, welche die reaktive Kathodenzone (615) mit dem ersten Kollektor (594) in Kommunikation bringen;
- mindestens ein Element von der Membran und der ersten Verstärkung, das die Kathodenhomogenisierungskanäle (612) nicht bedeckt, und wobei die Tiefe der Kathodenhomogenisierungskanäle größer ist als die Tiefe der Strömungskanäle (616) der reaktiven Kathodenzone (615).

2. Elektrochemischer Reaktor (4) nach Anspruch 1,
wobei die erste Verstärkung (116) die Kathode (112) umgibt, wobei der Reaktor außerdem eine zweite Verstärkung (117) umfasst, die an der ersten Fläche der Membran befestigt ist und die Anode (111) umgibt, wobei mindestens zwei Elemente von der Membran und der ersten und zweiten Verstärkung die Kathodenhomogenisierungskanäle (612) nicht bedecken.

3. Elektrochemischer Reaktor (4) nach Anspruch 1 oder 2,
wobei sich die Strömungskanäle (616) der reaktiven Kathodenzone (615) in dieselbe Richtung erstrecken.

4. Elektrochemischer Reaktor (4) nach einem der vorhergehenden Ansprüche, ferner umfassend eine Gasdiffusionsschicht (114) in Kontakt mit der Kathode (112).

5. Elektrochemischer Reaktor (4) nach Anspruch 4,
wobei die Differenz der Tiefe zwischen den Kathodenhomogenisierungskanälen (612) und den Strömungskanälen der reaktiven Kathodenzone (615) mindestens gleich der Summe der Dicke der Gasdiffusionsschicht (114) und der Dicke des Elements ist, das die Kathodenhomogenisierungskanäle (612) nicht bedeckt.

6. Elektrochemischer Reaktor (4) nach den Ansprüchen 2 und 5,
wobei die Differenz der Tiefe zwischen den Kathodenhomogenisierungskanälen (612) und den Strömungskanälen der reaktiven Kathodenzone (615) mindestens gleich der Summe der Dicke der Gasdiffusionsschicht (114) und der Dicken der beiden Elemente ist, welche die Kathodenhomogenisierungskanäle (612) nicht bedecken.

7. Elektrochemischer Reaktor (4) nach einem der vorhergehenden Ansprüche,
wobei die bipolare Platte (52) von einem zweiten Strömungskollektor (596) durchquert wird, wobei eine zweite Fläche der bipolaren Platte Strömungskanäle (626) einer reaktiven Anodenzone (625) umfasst und Anodenhomogenisierungskanäle (622) umfasst, welche die reaktive Anodenzone (625) mit dem zweiten Kollektor (596) in Kommunikation bringen, wobei die Tiefe der Kathodenhomogenisierungskanäle (612) größer ist als die Tiefe der Anodenhomogenisierungskanäle (622).

8. Elektrochemischer Reaktor (4) nach Anspruch 7,
wobei die Differenz der Tiefe zwischen den Kathodenhomogenisierungskanälen (612) und den Anodenhomogenisierungskanälen (622) mindestens gleich der Dicke des Elements ist, das die Kathodenhomogenisierungskanäle (612) nicht bedeckt.

9. Elektrochemischer Reaktor (4) nach den Ansprüchen 2 und 8,
wobei die Differenz der Tiefe zwischen den Kathodenhomogenisierungskanälen (612) und den Anodenhomogenisierungskanälen (622) mindestens gleich der Summe der Dicken der Elemente ist, welche die Kathodenhomogenisierungskanäle (612) nicht bedecken.

10. Elektrochemischer Reaktor (4) nach einem der vorhergehenden Ansprüche,
wobei Kühlflüssigkeitsströmungskanäle im Inneren der bipolaren Platte (52) angeordnet sind.

## Claims

1. Electrochemical reactor (4), **characterized in that** it comprises:
- a membrane electrode assembly (110) including a proton exchange membrane (113), an anode (111) on a first face of the membrane, a cathode (112) on a second face of the membrane, at least one first reinforcement (116) fastened to one of the faces of the membrane and surrounding either the anode, or the cathode;
- a conductive bipolar plate (52) passed through by a first flow manifold (593, 594, 591, 596), a first face comprising flow channels (616) of a cathodic reactive zone (615) and comprising cathodic homogenizing channels (612) placing the cathodic reactive zone (615) in communication with the first manifold (594);
- at least one element from said membrane and said first reinforcement not covering the cathodic homogenizing channels (612), and the depth of the cathodic homogenizing channels being greater than the depth of the flow channels (616) of the cathodic reactive zone (615).

2. Electrochemical reactor (4) according to Claim 1, wherein the first reinforcement (116) surrounds the cathode (112), the reactor also comprising a second reinforcement (117) fastened to the first face of the membrane and surrounding the anode (111), at least two elements from said membrane and said first and second reinforcements not covering the cathodic homogenizing channels (612).

3. Electrochemical reactor (4) according to Claim 1 or 2, wherein the flow channels (616) of the cathodic reactive zone (615) extend in the same direction.

4. Electrochemical reactor (4) according to any one of the preceding claims, also comprising a gas diffusion layer (114) in contact with said cathode (112).

5. Electrochemical reactor (4) according to Claim 4, wherein the difference in depth between the cathodic homogenizing channels (612) and the flow channels of the cathodic reactive zone (615) is at least equal to the sum of the thickness of the gas diffusion layer (114) and of the thickness of said element not covering the cathodic homogenizing channels (612).

6. Electrochemical reactor (4) according to Claims 2 and 5, wherein the difference in depth between the cathodic homogenizing channels (612) and the flow channels of the cathodic reactive zone (615) is at least equal to the sum of the thickness of the gas diffusion layer (114) and of the thicknesses of said two elements not covering the cathodic homogenizing channels (612).

7. Electrochemical reactor (4) according to any one of the preceding claims, wherein said bipolar plate (52) is passed through by a second flow manifold (596), a second face of the bipolar plate comprising flow channels (626) of an anodic reactive zone (625) and comprising anodic homogenizing channels (622) placing the anodic reactive zone (625) in communication with the second manifold (596), the depth of the cathodic homogenizing channels (612) being greater than the depth of the anodic homogenizing channels (622).

8. Electrochemical reactor (4) according to Claim 7, wherein the difference in depth between the cathodic homogenizing channels (612) and the anodic homogenizing channels (622) is at least equal to the thickness of said element not covering the cathodic homogenizing channels (612).

9. Electrochemical reactor (4) according to Claims 2 and 8, wherein the difference in depth between the cathodic homogenizing channels (612) and the anodic homogenizing channels (622) is at least equal to the sum of the thicknesses of said elements not covering the cathodic homogenizing channels (612).

10. Electrochemical reactor (4) according to any one of the preceding claims, wherein coolant flow channels are made within said bipolar plate (52).
